(19) **Europäisches Patentamt / European Patent Office / Office européen des brevets**

(11) **EP 4 769 513 A1**

(12) **EUROPEAN PATENT APPLICATION**
published in accordance with Art. 153(4) EPC

(43) Date of publication:
**01.07.2026 Bulletin 2026/27**

(21) Application number: **25867261.7**

(22) Date of filing: **15.09.2025**

(51) International Patent Classification (IPC):
**H01M 4/13** $^{(2010.01)}$   **H01M 4/66** $^{(2006.01)}$
**H01M 4/139** $^{(2010.01)}$   **H01M 4/04** $^{(2006.01)}$
**H01M 10/052** $^{(2010.01)}$   **H01M 50/543** $^{(2021.01)}$
**H01M 4/02** $^{(2006.01)}$

(52) Cooperative Patent Classification (CPC):
**H01M 4/02; H01M 4/04; H01M 4/13; H01M 4/139;**
**H01M 4/66; H01M 10/052; H01M 50/543;**
**Y02E 60/10; Y02P 70/50**

(86) International application number:
**PCT/KR2025/014321**

(87) International publication number:
**WO 2026/075390 (09.04.2026 Gazette 2026/15)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **02.10.2024 KR 20240133961**
**12.09.2025 KR 20250130613**

(71) Applicant: **LG Energy Solution, Ltd.**
**Seoul 07335 (KR)**

(72) Inventors:
• **KANG, Yonghee**
**Daejeon 34122 (KR)**

• **LEE, Kiseok**
**Daejeon 34122 (KR)**
• **LEE, Hochan**
**Daejeon 34122 (KR)**
• **LIM, Taeseob**
**Daejeon 34122 (KR)**
• **KIM, Jiyeon**
**Daejeon 34122 (KR)**
• **KIM, Jinil**
**Daejeon 34122 (KR)**

(74) Representative: **BCKIP Part mbB**
**Landsberger Straße 98**
**80339 München (DE)**

(54) **ELECTRODE FOR BIPOLAR BATTERY, MANUFACTURING METHOD THEREFOR, AND BIPOLAR ASSEMBLY AND BIPOLAR BATTERY INCLUDING SAME**

(57) According to an embodiment of the present disclosure, provided is an electrode for a bipolar battery comprising:

a positive electrode that comprises a positive electrode current collector, a first positive electrode primer layer formed on one surface of the positive electrode current collector, a second positive electrode primer layer formed on the other surface of the positive electrode current collector, and a dry positive electrode material layer formed on the first positive electrode primer layer, and a negative electrode that comprises a negative electrode current collector, a negative electrode material layer formed on one surface of the negative electrode current collector, and a second negative electrode primer layer formed on the other surface of the negative electrode current collector,

wherein the second positive electrode primer layer of the positive electrode and the second negative electrode primer layer of the negative electrode are adhered in a direction facing each other, its manufacturing method, a bipolar assembly comprising the same, and a bipolar battery.

**Figure 2**

## Description

### TECHNICAL FIELD

Cross Citation with Related Application(s)

This application claims priority to and the benefit of Korean Patent Application No. 10-2024-0133961, filed on October 2, 2024, and Korean Patent Application No. 10-2025-0130613, filed on September 12, 2025, the disclosures of which are incorporated herein by reference in their entirety.

The present disclosure relate to an electrode for a bipolar battery, its manufacturing method, a bipolar assembly comprising the same, and a bipolar battery.

### BACKGROUND

Recently, as the application area of lithium secondary batteries has rapidly been extended not only to supply power for electronic devices such as electricity, electronics, communication, and computers, but also to power storage and supply for large-area devices such as automobiles and power storage systems, demand for secondary batteries that have high capacity, high output and high stability is increasing.

The electrode used in such secondary batteries may be classified into a monopolar electrode in which active materials having the same polarity are coated on both surfaces of the current collector, and a bipolar electrode in which active materials having different polarity are coated on both surfaces of the current collector.

A secondary battery utilizing a monopolar electrode have a connection portion for connecting the electrodes, which may lead to a decrease in output due to the electrical resistance of the connecting portions. Further, temperature rise due to Joule heating may cause various problems in terms of cell safety, and battery components for heat dissipation structures, thermal monitoring, and wiring occupy a significant portion of space in the battery pack, which results in deterioration of space efficiency. In contrast, a secondary battery utilizing a bipolar electrode laminate the electrodes without having connection portions, which may minimize connection resistance of the electrode, provides excellent output performance, simplifies the structure and components, and has excellent space efficiency, so that the energy density and power density per volume may be considerably improved relative to conventional lithium-ion batteries.

However, bipolar electrodes utilize a single current collector such as SUS, and thus have limitations in the operating temperature and voltage range of the battery due to corrosion resistance, etc. Therefore, as an alternative, electrodes using Cu coated Al foil have also been manufactured.

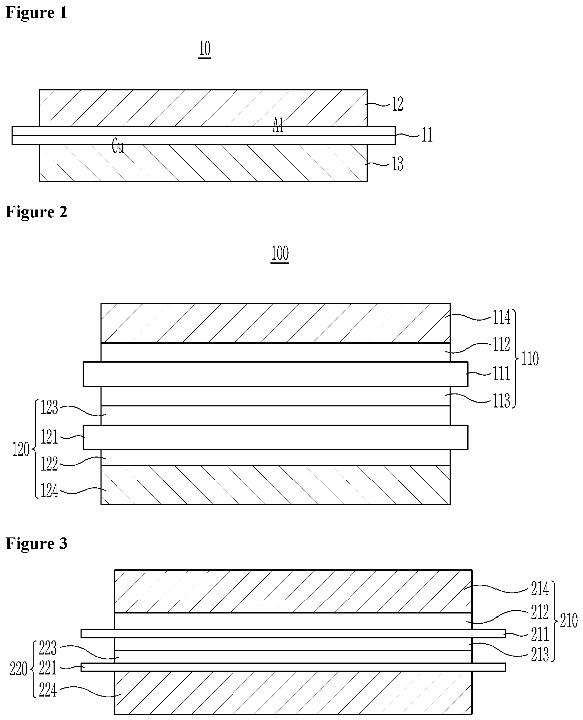

Figure 1 shows a schematic diagram of an electrode using a conventional Cu-coated Al current collector.

Referring to Figure 1, a conventional bipolar battery electrode 10 has a structure in which on both surfaces of a clad current collector 11 in which Cu and Al foils are adhered to each other, a positive electrode material layer 12 is formed in the direction of the Al foil, and a negative electrode material layer 13 is formed in the direction of the Cu foil.

However, since such clad current collectors 11 are coated on both surfaces with a positive electrode material layer 12 and a negative electrode material layer 13, there is a risk of electrode damage due to differences in the solvent between the non-aqueous and aqueous electrolytes. Typically, bipolar electrodes use patterned electrodes in which all four directional edges are formed as uncoated portions, and thus, misalignment between the positive electrode material layer 12 and negative electrode material layer 13 is frequently occurrs. When these electrodes are rolled, there is a problem that the possibility of electrode curling and pinhole formation increases due to the difference in active material and the difference in ductility between Al and Cu.

Therefore, there is a need to develop an electrode for a bipolar battery that solves these problems and thus secures durability and processability.

### DETAILED DESCRIPTION OF THE INVENTION[

#### Technical Problem

It is an object of the present disclosure to provide an electrode for a bipolar battery that can enhance adhesion strength between a positive electrode current collector and a negative electrode current collector and overcome differences in physical properties to secure durability.

It is another object of the present disclosure to provide an electrode for a bipolar battery in which a positive electrode layer and a negative electrode layer are simultaneously formed on both surfaces of a current collector using a dry electrode material layer.

It is another object of the present disclosure to provide a novel manufacturing method that can easily manufacture a patterned electrode for a bipolar battery by pattern coating of a primer layer.

It is yet another object of the present disclosure to provide a novel method for manufacturing an electrode for a bipolar battery that can facilitate alignment without migration issues between a positive electrode and a negative electrode, minimize wrinkling and peeling issues of the current collector, and achieve high density.

**Technical Solution**

According to an aspect of the present disclosure, provided is an electrode for a bipolar battery comprising:

a positive electrode that comprises a positive electrode current collector, a first positive electrode primer layer formed on one surface of the positive electrode current collector, a second positive electrode primer layer formed on the other surface of the positive electrode current collector, and a dry positive electrode material layer formed on the first positive electrode primer layer, and

a negative electrode that comprises a negative electrode current collector, a negative electrode material layer formed on one surface of the negative electrode current collector, and a second negative electrode primer layer formed on the other surface of the negative electrode current collector,

wherein the second positive electrode primer layer of the positive electrode and the second negative electrode primer layer of the negative electrode are adhered in a direction facing each other.

Here, the negative electrode material layer may be a wet negative electrode material layer.

In an embodiment, a first negative electrode primer layer may be formed between the negative electrode current collector and the negative electrode material layer on one surface of the negative electrode current collector, and the negative electrode material layer may be a wet negative electrode material layer or a dry negative electrode material layer.

In this case, the first positive electrode primer layer, the second positive electrode primer layer, the first negative electrode primer layer, and the second negative electrode primer layer may each comprise a conductive material and a binding material.

Here, the positive electrode primer layer of the first positive electrode primer layer and the second positive electrode primer layer, and the negative electrode primer layer of the first negative electrode primer layer and the second negative electrode primer layer may have mutually different compositions.

The first positive electrode primer layer and the second positive electrode primer layer may be respectively coated so that positive electrode uncoated portions are formed on the four directional edges on one surface and the other surface of the positive electrode current collector.

Further, the first negative electrode primer layer and the second negative electrode primer layer may be respectively coated so that negative electrode uncoated portions are formed on the four directional edges on one surface and the other surface of the negative electrode current collector.

The first positive electrode primer layer and the second positive electrode primer layer may be respectively formed over an area of 60% to 80% of the entire width of the upper surface of the positive electrode current collector, and the first negative electrode primer layer and the second negative electrode primer layer may be respectively formed over an area of 60% to 80% of the entire width of the upper surface of the negative electrode current collector.

On the other hand, the dry positive electrode material layer may be formed over an area of 60% to 80% of the entire width of the upper surface of the positive electrode current collector, and the first negative electrode material layer may be formed over an area of 60% to 80% of the entire width of the upper surface of the negative electrode current collector.

The dry positive electrode material layer is a dry film containing no solvent, and comprises a positive electrode active material, a conductive material, and a binder, wherein the binder may comprise a fiberized polymer.

The wet negative electrode material layer is a coating layer in a state where the solvent is volatilized from a slurry prepared so as to contain a solvent, and may comprise a negative electrode active material, a conductive material, and a binder. The dry negative electrode layer is a dry film containing no solvent, and comprises a negative electrode active material, a conductive material, and a binder, wherein the binder may comprise a fiberized polymer.

According to another aspect of the present disclosure, provided is a method for manufacturing an electrode for a bipolar battery, the method comprising:

a step of pattern-coating one surface and the other surface of a sheet-type positive electrode current collector so that a positive electrode coated portion coated with a positive electrode primer layer and a positive electrode uncoated portion not coated with the positive electrode primer layer are alternately arranged to thereby prepare a primer-coated positive electrode current collector, rolling a sheet-type dry positive electrode film onto the positive electrode primer layer on one surface of the primer-coated positive electrode collector to form a dry positive electrode material layer, and then removing the dry positive electrode material layer formed on the positive electrode uncoated portion where no positive electrode primer layer is formed, to thereby prepare a positive electrode sheet,

a step of pattern-coating the other surface of a sheet-type negative electrode current collector so that a negative electrode coated portion coated with a negative electrode primer layer and a negative electrode uncoated portion not coated with the negative electrode primer layer are arranged alternately to thereby prepare a primer-coated negative electrode current collector, and forming a pattern-coated negative electrode material layer on one surface of the negative electrode current collector so as to correspond to the formation position of the negative electrode primer layer to thereby prepare a negative electrode sheet, and

a step of laminating the positive electrode sheet and the negative electrode sheet so that the positive electrode primer layer formed on the other surface of the primer coated positive electrode current collector faces the negative electrode primer layer formed on the other surface of the primer coated negative electrode current collector to thereby prepare an electrode sheet.

In an embodiment, the pattern-coated negative electrode material layer may be a wet negative electrode material layer in which a negative electrode slurry is pattern-coated on one surface of a negative electrode collector and dried.

In another embodiment, the primer-coated negative electrode collector may be prepared by pattern-coating one surface and the other surface of a sheet-type negative electrode current collector so that a negative electrode coated portion coated with a negative electrode primer layer and a negative electrode uncoated portion not coated with the negative electrode primer layer are alternately arranged, and the pattern-coated negative electrode material layer may be formed either by applying negative electrode slurry onto the negative electrode primer layer, which is coated on one surface of the negative electrode current collector, and drying it to form a wet negative electrode material layer, or by rolling a sheet-type dry negative electrode film to form a dry negative electrode material layer, and then removing the wet negative electrode material layer or dry negative electrode material layer formed on the negative electrode uncoated portion where the negative electrode primer layer is not formed.

In another embodiment, a primer-coated negative electrode current collector is prepared by pattern-coating one surface and the other surface of the sheet-type negative electrode current collector so that a negative electrode coated portion coated with a negative electrode primer layer and a negative electrode uncoated portion not coated with the negative electrode primer layer are alternately arranged, and the pattern-coated negative electrode material layer is prepared by pattern-coating a negative electrode slurry onto a negative electrode primer layer coated on one surface of a negative electrode current collector, and then drying the negative electrode slurry to form a wet negative electrode material layer.

Here, the positive electrode primer layer and the negative electrode primer layer may be respectively coated so as to form a positive electrode uncoated portion and a negative electrode uncoated portion on both surfaces of the positive electrode current collector and the negative electrode current collector, based on the width direction.

The positive electrode primer layer and the negative electrode primer layer may be coated by a wet process.

The removal of the dry positive electrode material layer formed on the positive electrode uncoated portion where no positive electrode primer layer is formed, and the removal of the dry negative electrode material layer or the wet negative electrode material layer formed on the negative electrode uncoated portion where no negative electrode primer layer is formed may be performed by air spraying.

In addition, the manufacturing method may further comprise a cutting step of cutting the laminated sheet into unit electrodes after laminating the positive electrode sheet and the negative electrode sheet.

According to another aspect of the present disclosure, provided is a bipolar assembly comprising: the electrode for a bipolar battery and a separator.

According to yet another aspect of the present disclosure, provided is a bipolar battery comprising the bipolar assembly, wherein the bipolar assembly is incorporated into a battery case, and a positive electrode terminal and a negative electrode terminal are attached to the outermost electrodes on both surfaces in the laminating direction of the bipolar assembly, respectively.

**BRIEF DESCRIPTION OF THE DRAWINGS**

Figure 1 shows a schematic diagram of a conventional electrode for a bipolar battery.
Figure 2 is a schematic cross-sectional view of an electrode for a bipolar battery according to an embodiment of the present disclosure.
Figure 3 is a cross-sectional schematic diagram of an electrode for a bipolar battery according to another embodiment of the present disclosure.
Figure 4 is a perspective view showing only the positive electrode side of an electrode for a bipolar battery according to one embodiment of the present disclosure.
Figure 5 is a perspective view showing only the negative electrode side of an electrode for a bipolar battery according to an embodiment of the present disclosure.

Figure 6 is a flowchart of a method for manufacturing of an electrode for a bipolar battery according to an embodiment of the present disclosure.

Figure 7 is a schematic diagram of an apparatus for manufacturing of an electrode for a bipolar battery according to another embodiment of the present disclosure.

Figure 8 is a flowchart of a method for manufacturing of an electrode for a bipolar battery according to one embodiment of the present disclosure.

Figure 9 is a schematic diagram of an apparatus for manufacturing of an electrode for a bipolar battery according to another embodiment of the present disclosure.

Figure 10 is a top view showing a part of the positive electrode side manufacturing process of Figure 3.

## DETAILED DESCRIPTION OF THE EMBODIMENTS

Hereinafter, terms or words used in the present specification and claims should not be construed as being limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

Unless defined otherwise, all terms (including technical and scientific terms) used herein may be used as meanings that can be commonly understood by those of ordinary skill in the art to which the present disclosure belongs. In addition, terms defined in a commonly used dictionary are not interpreted ideally or excessively unless specifically explicitly defined.

The technical terms provided herein is merely used for the purpose of describing particular embodiments only, and is not intended to be limiting of the present disclosure. The singular forms "a," "an," and "the" are intended to include the plural forms as well, unless the context clearly indicates otherwise. The terms "comprises" and/or "comprising" as used herein does not exclude the existence or the addition of one or more elements other than those mentioned.

Throughout the descriptions herein, when a certain part "includes" a component, this does not indicate that the certain part excludes other components, but indicates that the part may further include other components, unless otherwise defined.

Throughout the descriptions herein, the phrase "formed on ~" basically refers to cases where a component is formed in direct contact with the object, but does not exclude cases where other components are interposed; as long as other components are mentioned in the specification, it may be interpreted as including cases where these components are interposed therebetween.

Below, various embodiments of the present disclosure will be described in detail with reference to the accompanying drawings so that those skilled in the art can easily carry out them. The present disclosure may be modified in various different ways, and is not limited to the embodiments set forth herein. The same or similar components throughout this specification and claims will be denoted with the same reference numerals.

Electrode for Bipolar Battery

According to an embodiment of the present disclosure, an electrode for a bipolar battery is provided.

Figure 2 is a schematic cross-sectional view of a bipolar battery electrode 100 according to an embodiment of the present disclosure.

Referring to Figure 2, a bipolar battery electrode 100 comprises a positive electrode 110 and a negative electrode 120, and has a structure in which the positive electrode 110 and the negative electrode 120 are joined together.

Here, the positive electrode 110 comprises a positive electrode current collector 111, a first positive electrode primer layer 112 formed on one surface of the positive electrode current collector 111, a second positive electrode primer layer 113 formed on the other surface of the positive electrode current collector 111, and a dry positive electrode material layer 114 formed on the first positive electrode primer layer 112, and the negative electrode 120 comprises a first negative electrode primer layer 122 formed on one surface of a negative electrode current collector 121, a second negative electrode primer layer 123 formed on the other surface of the negative electrode current collector 121, and a dry or wet negative electrode material layer 124 formed on the first negative electrode primer layer 122.

Further, the positive electrode 110 and the negative electrode 120 have a structure in which the second positive electrode primer layer 113 and the second negative electrode primer layer 123 are bonded and joined in a direction facing each other.

In this case, the first positive electrode primer layer 112 and the second positive electrode primer layer 113 may be formed by being coated on one surface and the other surface of the positive electrode current collector 111 in a form where they make direct contact with each other, and the first negative electrode primer layer 122 and the second negative electrode primer layer 123 may be formed by being coated on one surface and the other surface of the negative electrode current collector 121 in a form where they make direct contact with each other.

Further, the dry positive electrode material layer 114 may be formed in a form where it makes direct contact with the first positive electrode primer layer 112, and the dry or wet negative electrode material layer 124 may be formed in a form where it makes direct contact with the first negative electrode primer layer 122.

Meanwhile, Figure 3 schematically shows a cross-sectional view of a bipolar battery electrode according to another embodiment of the present disclosure.

Referring to Figure 3, a bipolar battery electrode 200 includes a positive electrode 210 and a negative electrode 220, and has a structure in which the positive electrode 210 and the negative electrode 220 are joined together.

Here, the positive electrode 210 includes a positive electrode current collector 211, a first positive electrode primer layer 212 formed on one surface of the positive electrode current collector 211, a second positive electrode primer layer 213 formed on the other surface of the positive electrode current collector 211, and a dry positive electrode material layer 214 formed on the first positive electrode primer layer 212, and the negative electrode 220 includes a second negative electrode primer layer 223 formed on the other surface of the negative electrode current collector 221, and a wet negative electrode material layer 224 formed on one surface of the negative electrode current collector 221.

Further, the positive electrode 210 and the negative electrode 220 have a structure in which the second positive electrode primer layer 213 and the second negative electrode primer layer 223 are adhered and joined in a direction facing each other.

In this case, the first positive electrode primer layer 212 and the second positive electrode primer layer 213 may be formed by being coated on one surface and the other surface of the positive electrode current collector 211 in a form where they make direct contact with each other, and the second negative electrode primer layer 223 may be formed by being coated on the other surface of the negative electrode current collector 221 in a form where they make direct contact with each other.

Additionally, the dry positive electrode material layer 214 may be formed so as to make direct contact with the first positive electrode primer layer 212, and the wet negative electrode material layer 224 may be formed so as to make direct contact with one surface of the negative electrode current collector 221.

That is, referring to Figures 2 and 3, the positive electrodes 110, 210 include a dry positive electrode material layer, while the negative electrodes 120, 220 may include both a dry negative electrode material layer and a wet negative electrode material layer.

Furthermore, if the electrode material layer is formed by a dry process, a primer layer is required, and if the electrode material layer is formed by a wet process, the formation of a primer layer is not required.

Therefore, when the first negative electrode primer layer 122 is formed on one surface of the negative electrode current collector 121 as shown in Figure 2, the negative electrode material layer 124 can be either a dry negative electrode material layer or a wet negative electrode material layer. On the other hand, when the first negative electrode primer layer is not formed on one surface of the negative electrode current collector 221 as shown in Figure 3, the negative electrode material layer 224 is formed as a wet negative electrode material layer.

However, regardless of the structure, the bipolar battery electrodes 100, 200 according to the present disclosure are configured such that the positive electrode current collector 111, 211 and the negative electrode current collector 121, 221 are joined to each other through the second positive electrode primer layer 113, 213 and the second negative electrode primer layers 123, 223, whereby it is possible to solve the problem of a high probability of peeling despite rolling due to differences in physical properties between the positive electrode current collectors 111, 211 and the negative electrode current collectors 121, 221.

Meanwhile, the first positive electrode primer layers 112, 212, the second positive electrode primer layers 113, 213, the first negative electrode primer layer 122, and the second negative electrode primer layers 123, 223 may each include a conductive material and a binding material. In this case, the positive electrode primer layers of the first positive electrode primer layers 112, 212 and the second positive electrode primer layers 113, 213 and the negative electrode primer layers of the first negative electrode primer layer 122 and the second negative electrode primer layers 123, 223 may have the same or different compositions to each other. Specifically, the composition may be different, taking into account the differences in physical properties of the positive electrode current collectors 111, 211 and the negative electrode current collectors 121, 221.

Here, "having different composition" means that the types of materials included are different, or even if the same materials are included, their contents may differ. Conversely, "having the same composition" means that the types and contents of the materials included are the same.

By including a conductive material, it is possible to maintain electrical connection between the positive electrode current collectors 111, 211 and the negative electrode current collectors 121, 221.

Here, the conductive material is not particularly limited as long as it has conductivity without causing a chemical change in the battery, and, for example, graphite such as natural graphite or artificial graphite; carbon black such as carbon black, acetylene black, ketjen black, channel black, furnace black, lamp black, or thermal black; conductive fibers such as carbon fibers or metal fibers; metal powders such as carbon fluoride, aluminum, and nickel powders; conductive whiskers such as zinc oxide whiskers and potassium titanate whiskers; conductive metal oxide such as titanium oxide; a conductive material such as polyphenylene derivatives, and the like may be used.

The binding material is not limited as long as it has a general binding component, and for example, polyvinylidene fluoride, polyvinyl alcohol, carboxymethylcellulose(CMC), starch, hydroxypropyl cellulose, regenerated cellulose, polyvinylpyrrolidone, tetrafluoroethylene, polyethylene, polypropylene, ethylene-propylene-diene polymer(EPDM), a sulfonated-EPDM, a styrene-butadiene rubber, a nitrile-butadiene rubber, a fluorine rubber, and the like may be used.

In this case, the conductive material may be contained in an amount of 5 to 50% by weight, specifically 5 to 30% by weight, and more specifically 10 to 30% by weight, based on the total weight of the respective primer layers in the first positive electrode primer layers 112, 212, the second positive electrode primer layers 113, 213, the first negative electrode primer layer 122, and the second negative electrode primer layers 123, 223.

If the content of the conductive material falls outside the above range and is too small, a sufficient conductive path may not be formed between the positive electrode current collectors 111, 211 and the negative electrode current collectors 121, 221, and the resistance increases. If the content is too large, the binding property may decrease, which is not preferable.

Additionally, the binding material may be included in an amount of 1 to 10% by weight, specifically 1 to 5% by weight, based on the total weight of the respective primer layers in the first positive electrode primer layers 112, 212, the second positive electrode primer layers 113, 213, the first negative electrode primer layer 122, and the second negative electrode primer layers 123, 223.

If the content of the binding material is too low and falls outside the above range, the adhesive strength will be too low to obtain sufficient adhesion between the positive electrode current collectors 111, 211 and the negative electrode current collectors 121, 221, which may result in peeling, and if the content is too high, the resistance may become larger.

Specifically, since the positive electrode primer layer is formed on a positive electrode current collector primarily composed of Al, it may include carbon black as a conductive material and PVDF as a binding material. Since the negative electrode primer layer is formed on a negative electrode current collector primarily composed of Cu, it may include graphite as a conductive material and polyvinylpyrrolidone (PVP) or polyethylene (PE) as a binding material. Meanwhile, the content of each component may be adjusted within the above ranges.

Meanwhile, the first positive electrode primer layers 112, 212, the second positive electrode primer layers 113, 213, the first negative electrode primer layer 122, and the second negative electrode primer layers 123, 223 may be respectively formed to a thickness of 0.1 to 10 $\mu$m. If the thickness falls outside the above range and is too thin, it is not possible to sufficiently secure the adhesiveness desired by the present disclosure. If the thickness is too thick, the overall volume may increase and thus the energy density may decrease relative to the volume, and the conductive path may become longer and thus increase the resistance, which is not preferable from the viewpoint of the performance of the secondary battery.

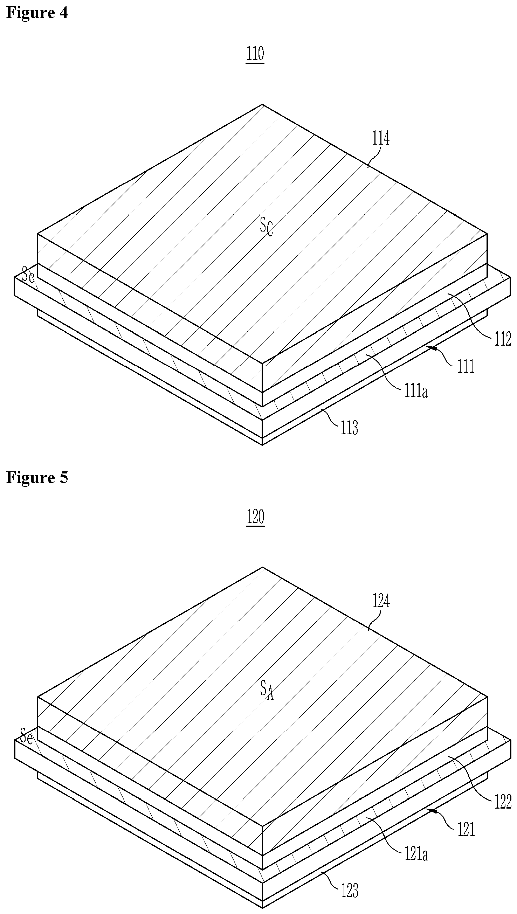

In order to more specifically explain the structure of the positive electrode side (Figure 4) and the negative electrode side (Figure 5), Figures 4 and 5 show perspective views of the positive electrode side and the negative electrode side of a bipolar battery electrode 100 according to an embodiment of the present disclosure.

First, referring to Figure 4, the positive electrode 110 of the bipolar battery electrode 100 is formed such that the first positive electrode primer layer 112 and the second positive electrode primer layer 113 each include a positive electrode uncoated portion 111a at the four-directional edges on one surface and the other surface of the positive electrode current collector 111. Therefore, the dry positive electrode material layer 114 formed on the first positive electrode primer layer 112 may also be formed so as not to cover the positive electrode uncoated portion 111a.

Similarly, referring to Figure 5, the negative electrode 120 of the bipolar battery electrode 100 is formed such that the first negative electrode primer layer 122 and the second negative electrode primer layer 123 each include negative electrode uncoated portions 121a at the four-directional edges on one surface and the other surface of the negative electrode current collector 121. Therefore, the dry or wet negative electrode material layer 124 formed on the first negative electrode primer layer 122 may also be formed so as not to cover the negative electrode uncoated portion 121a.

Due to the nature of bipolar batteries, an uncoated portion must be formed around the edge of the current collector, and therefore the primer layers and electrode material layers have a coated structure so as to have an uncoated portions at the edges of the current collector.

However, since the positive electrode uncoated portion 111a and negative electrode uncoated portion 121a are formed for the purpose of sealing when subsequently assembling into a bipolar unit cell or for the purpose of attaching electrode leads, it is sufficient for them to have a width greater than a certain portion.

Therefore, referring again to Figure 4, the first positive electrode primer layer 112 and the second positive electrode primer layer 113 may be each formed over an area of 60% to 80% of the entire width Se of the upper surface of the positive electrode current collector 111, and referring to Figure 5, the first negative electrode primer layer 122 and the second negative electrode primer layer 123 may be each formed over an area of 60% to 80% of the entire width Se' of the upper surface of the negative electrode current collector 121.

Similarly, the dry positive electrode material layer 114 may be formed to have an area Sc of 60% to 80% of the entire width Se of the upper surface of the positive electrode current collector 111, and the negative electrode material layer 124 may be formed to have an area $S_A$ of 60% to 80% of the entire width Se of the upper surface of the negative electrode current collector 121.

If the area falls outside the above range and is too small, the area of the electrode material layer containing the active material is small, which leads to a reduction in the energy density per volume, and if the thickness is too large, the positive electrode uncoated portion 111a and the negative electrode uncoated portion 121a may not be properly formed, which is not preferable.

Meanwhile, referring again to Figures 2 and 3, the bipolar battery electrodes 100, 200 according to the present disclosure preferably use dry electrode material layers as the electrode material layers in order to solve the problems of processability and difficulty in aligning electrodes when forming electrode material layers using conventional wet processes, and in particular, the positive electrode material layer is a dry positive electrode material layer.

When forming an electrode material layer using a dry process, it is easy to form an electrode material layer in the same area as the part where the primer layer is formed, which not only increases easiness to process but also prevents adverse effects on the electrode caused by the drying process required in a wet process, and allows the electrode to be manufactured without migration issues.

Therefore, according to the present disclosure, the positive electrodes 110, 210 are a dry film fabricated by a dry process without using a solvent, and may be formed by rolling a dry positive electrode material layers 114, 214 onto first positive electrode primer layers 112, 212. In the case of bipolar batteries, it is essential to achieve a high-density electrode. However, since it is difficult in terms of process to achieve a high-density electrode by a wet process, it is preferable to fabricate it as a dry film.

Here, the dry positive electrode material layers 114, 214 include a positive electrode active material, a conductive material, and a binder. For dry manufacturing, the binder may include a fiberized polymer that is fiberized by shearing.

Specifically, the positive electrode active material is not limited as long as it is in the form of a lithium transition metal oxide, a lithium metal iron phosphate, or a metal oxide, and examples thereof may include a layered compound such as lithium cobalt oxide ($LiCoO_2$) and lithium nickel oxide ($LiNiO_2$) or a compound substituted with one or more transition metals; lithium manganese oxides such as formula $Li_{1+x}Mn_{2-x}O_4$ (where, x is 0 ~ 0.33), $LiMnO_3$, $LiMn_2O_3$, $LiMn_2O_3$, and $LiMnO_2$; lithium copper oxide ($Li_2CuO_2$); vanadium oxides such as $LiV_3O_8$, $LiFe_3O_4$, $V_2O_5$, and $Cu_2V_2O_7$; Ni-site type lithium nickel oxides represented by formula $LiNi_{1-x}M_xO_2$ (where M = Co, Mn, Al, Cu, Fe, Mg, Ca, Zr, Ti, B, P, W, Si, Na, K, Mo, V, Nb, Ru or Ga, and x = 0.01 ~ 0.3); lithium manganese composite oxides represented by formula $LiMn_{2-x}M_xO_2$ (where M = Co, Ni, Fe, Cr, Zn or Ta, and x = 0.01 ~ 0.1) or $Li_2Mn_3MO_8$ (where M = Fe, Co, Ni, Cu or Zn); $LiMn_2O_4$ where some of the Li atoms are substituted with alkaline earth metal ions; $LiMn_2O_4$; a disulfide compound; lithium metal phosphate $LiMPO_4$ (where M is Fe, CO, Ni, or Mn), a disulfide compound; $Fe_2(MoO_4)_3$ and the like, but is not limited thereto.

The conductive material is not particularly limited as long as it has conductivity without causing a chemical change in the corresponding battery, and for example, graphite such as natural graphite and artificial graphite; graphene; active carbon; active carbon fiber; carbon blacks such as carbon black, acetylene black, ketjen black, channel black, furnace black, lamp black, and thermal black; conductive fibers such as carbon fiber and metal fiber; metal powders such as carbon fluoride, aluminum, and nickel; conductive whiskey such as zinc oxide and potassium titanate; conductive metal oxides such as titanium oxide; conductive materials such as polyphenylene derivatives may be used. Specifically, the conductive material may include at least one selected from the group consisting of active carbon, graphite, carbon black, graphene and single-walled or multi-walled carbon nanotubes for uniform mixing and improvement of conductivity, and more specifically, it may include carbon black or an active carbon.

The conductive material may be included in an amount of 0.1 to 20% by weight, specifically 0.5 to 10% by weight, or more specifically 0.5 to 5% by weight, based on the total weight of the dry positive electrode material layers 114, 214.

The fiberized polymer used as the binder may be polytetrafluoroethylene (PTFE). This fiberized polymer may be included in an amount of 50% by weight or more, or 100% by weight, based on the total weight of the binder.

Since the fiberized polymer is fiberized by shearing, a dry film (free-standing film) may be manufactured by mixing the positive electrode active material, conductive material, and binder and shearing without a separate solvent. The dry film fabricated in this way can be used as a dry positive electrode material layers 114, 214.

Further, the binder may, in addition to polytetrafluoroethylene, further include PEO(polyethylene oxide), PVdF(polyvinylidene fluoride), PVdF-HFP(polyvinylidene fluoride-co-hexafluoropropylene), polyvinyl alcohol, carboxymethyl cellulose(CMC), starch, hydroxypropyl cellulose, regenerated cellulose, polyvinyl pyrrolidone, polyethylene, polypropylene, ethylene-propylene-diene monomer, sulfonated ethylene-propylene-diene monomer, styrene-butadiene rubber, fluorine rubber, and various copolymers thereof. Other binders known in the art may also be included.

Typically, the binder may be included in an amount of 0.5 to 20% by weight, specifically 0.5 to 10% by weight, or more specifically 0.5 to 5% by weight, based on the total weight of the dry positive electrode material layers 114, 214.

Meanwhile, optionally, a filler, which suppresses electrode expansion, may be further added to the dry positive electrode material layers 114, 214. The filler is not particularly limited as long as it is a fibrous material that does not cause a chemical change in the battery, and for example, olefin-based polymers such as polyethylene and polypropylene, and fibrous materials such as glass fiber and carbon fiber may be used.

On the other hand, in the structure shown in Figure 2, the negative electrode material layer 124 may be a dry film that does not contain a solvent, which may be a dry negative electrode material layer, or a wet negative electrode material layer that is applied and dried with a solvent.

Here, the dry negative electrode material layer may include a negative electrode active material, a conductive material, and a binder, and the binder may include a fiberized polymer as described for the positive electrode.

The wet negative electrode material layer may include a negative electrode active material, a conductive material, and a binder, but essentially does not include a fiberized polymer as a binder.

In the negative electrode material layer 124, the negative electrode active material may include: carbons such as hardly-graphitized carbon and graphite-based carbon; metal composite oxides such as $Li_xFe_2O_3(0{\leq}x{\leq}1)$, $Li_xWO_2(0{\leq}x{\leq}1)$, $Sn_xMe_{1-x}Me'_yO_z$ (Me: Mn, Fe, Pb, Ge; Me': Al, B, P, Si, Group I, Group II and Group III elements in the periodic table, halogens; $0{<}x{\leq}1$; $1{\leq}y{\leq}3$; $1{\leq}z{\leq}8$); lithium metals; lithium alloys; silicon-based alloys; tin-based alloys such as SiO, SiO/C, $SiO_x(1{<}x{<}2)$, and $SiO_2$; metal oxides such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, and $Bi_2O_5$; conductive polymers such as polyacetylene; and Li-Co-Ni-based materials.

The binder may include, for example, polyvinylidene fluoride (PVDF), polyvinyl alcohol, carboxymethylcellulose(CMC), starch, hydroxypropyl cellulose, regenerated cellulose, polyvinylpyrrolidone, polyethylene, polypropylene, ethylene-propylene-diene monomer, sulfonated ethylene-propylene-diene monomer, styrene-butadiene rubber, fluorine rubber, various copolymers thereof, or the like.

Typically, the binder may be included in an amount of 0.5 to 20% by weight, specifically 0.5 to 10% by weight, or more specifically 0.5 to 5% by weight, based on the total weight of the negative electrode material layer 124.

The other conductive materials and fillers, except for the fiberized polymer, are the same as those described for the positive electrodes 110, 210.

In the structure shown in Figure 3, the negative electrode material layer 224 is a wet negative electrode material layer that contains a solvent and is applied and dried, since it does not include a first negative electrode primer layer on one surface of the negative electrode current collector 221.

The wet negative electrode material layer is as described above.

Such dry positive electrode material layers 114, 214 and dry or wet negative electrode material layers 124, 224 can each be formed to a thickness of 100 to 300 μm, specifically 150 to 200 μm. If the thickness falls outside the above range and is too thin, the capacity decreases, and if the thickness is too thick, electronic conduction is not facilitated and the resistance increases, which is not preferable.

## Method for manufacturing electrode for bipolar battery

On the other hand, according to another embodiment of the present disclosure, a method for manufacturing the electrode for a bipolar battery is provided.

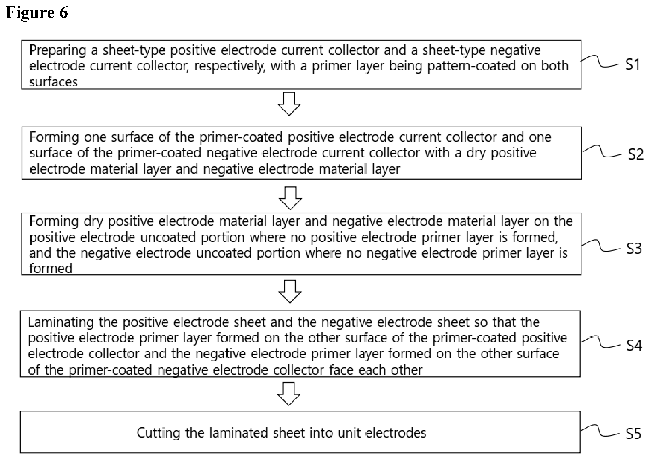

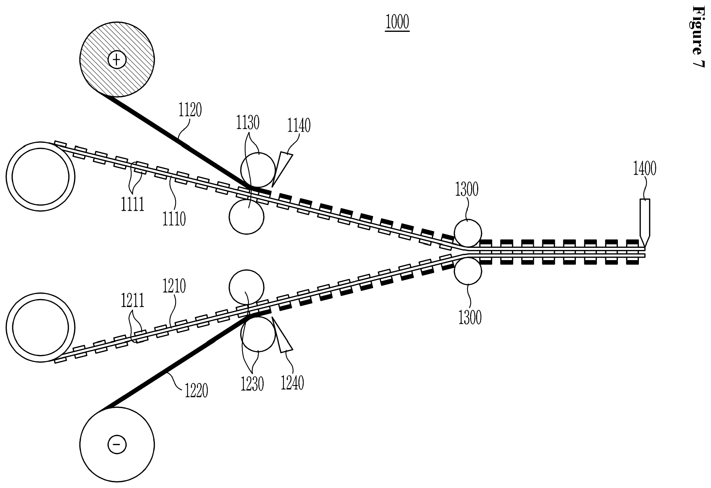

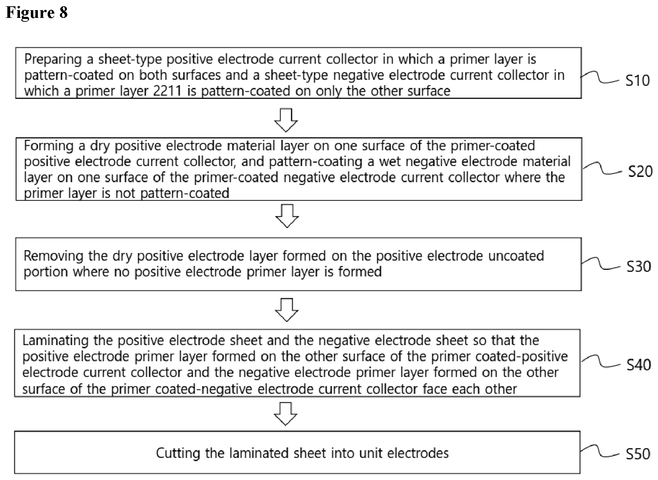

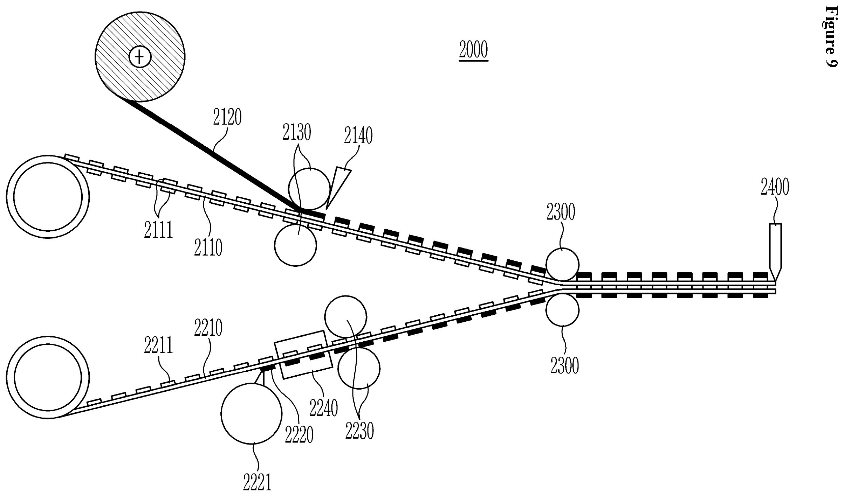

Figure 6 shows a flowchart of a method for manufacturing of an electrode for a bipolar battery according to an embodiment of the present disclosure, Figure 7 shows an apparatus 1000 for manufacturing of an electrode for a bipolar battery according to another embodiment of the present disclosure, Figure 8 shows a flowchart of a method for manufacturing of an electrode for a bipolar battery according to one embodiment of the present disclosure, and Figure 9 shows an apparatus 2000 for manufacturing of an electrode for a bipolar battery according to another embodiment of the present disclosure for illustrating the above manufacturing method.

First, referring to Figures 6 and 7, both the positive electrode material layer and the negative electrode material layer are formed a dry process, and thus, a manufacturing method is illustrated in which primer layers are formed on both surfaces of the positive electrode current collector and both surfaces of the negative electrode current collector.

Referring to Figures 6 and 7 together, in order to manufacture an electrode for a bipolar battery, a sheet-type positive electrode current collector and a sheet-type negative electrode current collector, in which a primer layer is pattern-coated on both surfaces, are prepared (S1).

Specifically, a positive electrode primer layer 1111 and a negative electrode primer layer 1211 may be respectively coated on a sheet-type positive electrode current collector 1110 and a sheet-type negative electrode current collector 1210 by a wet coating method.

In this case, the positive electrode primer layer 1111 and the negative electrode primer layer 1211 are pattern-coated so that the coated portion which is coated with these layer and the uncoated portion which is not coated with these layer are alternately arranged.

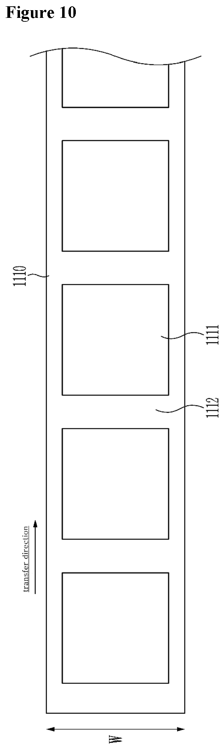

In order to illustrate this pattern coating in more detail, Figure 10 schematically shows a top view of a portion of the manufacturing process of the positive electrode.

Referring to Figures 7 and 10, specifically, one surface or the other surface of a sheet-type positive electrode current collector 1110 is pattern-coated such that positive electrode coated portion which is coated with a positive electrode primer layer 1111 and positive electrode uncoated portion 1112 which is not coated with a positive electrode primer layer 1111are alternately arranged. Thereby, a primer-coated positive electrode current collector is prepared.

Similarly, one surface or both surfaces of the negative electrode current collector 1210 are pattern-coated such that a negative electrode coated portion which is coated with a negative electrode primer layer 1211, and a negative electrode uncoated portion which is not coated with a negative electrode primer layer 1211, are alternately arranged. Thereby, a primer-coated negative electrode current collector is prepared.

Meanwhile, while the coated portion and the uncoated portion are alternately arranged, the positive electrode primer layer 1111 and the negative electrode primer layer 1211 are respectively coated to form positive electrode uncoated portions and negative electrode uncoated portions on both surfaces of the positive electrode current collector 1110 and the negative electrode current collector 1210 in the width (W) direction. Referring again to Figures 6 and 7, a dry positive electrode material layer and a negative electrode material layer are then formed on one surface of the primer-coated positive electrode current collector and one surface of the primer-coated negative electrode current collector, respectively (S2).

Specifically, referring to Figure 7, a dry positive electrode film 1120 may be rolled onto one surface of the primer-coated positive electrode current collector to form a dry positive electrode material layer, and a dry negative electrode film 1220 may be rolled on one surface of the primer-coated negative electrode current collector to form a dry negative electrode material layer.

Here, the dry positive electrode film 1120 is rolled and attached onto one surface of the primer-coated positive electrode current collector by rolling rolls 1130 to form a dry positive electrode material layer, and the dry negative electrode film 1220 is also rolled and attached onto one surface of the primer-coated negative electrode current collector by rolling rolls 1230 to form a dry negative electrode material layer.

In this case, Figure 7 shows that the negative electrode layer is formed as a dry negative electrode layer, but it may also be formed by a formation method of the wet negative electrode layer, similar to the formation method of the wet negative electrode layer as shown in Figure 9, which will be described later. When a wet negative electrode layer is formed, it may be formed by directly pattern-coating the negative electrode primer layer 1211, as shown in Figure 9, but it may also be formed continuously throughout the entire layer without pattern coating, and then a process of removing the wet negative electrode layer formed on the negative electrode uncoated portion may be performed.

On the other hand, when rolling a dry film or continuously applying a slurry, as in Figure 7, rolling and coating are wholly performed unlike the pattern coating of the primer layer, and thus, a process of forming it by pattern coating is required.

According to such a method, the electrode material layer is formed after the primer layer is formed, a difference in adhesion strength occurs between the current collector and the electrode material layer, as well as between the primer layer and the electrode material layer, thereby enabling pattern coating of the electrode material layer to be performed by a very simple method, which is most preferable.

Specifically, referring again to Figures 6 and 7, after the dry positive electrode material layer and negative electrode material layer are formed (not only when a dry negative electrode material layer is formed, but also after a wet negative electrode material layer is successively formed, although not shown in the drawings), the dry positive electrode material layer and negative electrode material layer formed on the positive electrode uncoated portion where no positive electrode primer layer 1111 is formed, and the negative electrode uncoated portion where no negative electrode primer layer 1211 is formed are removed (S3).

Here, the removal can be performed by air spraying using air sprayers 1140, 1240. In this case, the removal method is not limited as long as it involves generating air for removal. For example, removal can be achieved by generating a predetermined pressure using an air gun.

After partially removing the dry positive electrode material layer and the negative electrode material layer using air spraying, the positive electrode sheet and the negative electrode sheet are laminated together so that the primer coating-positive electrode primer layer 1111 formed on the other surface of the positive electrode current collector and the primer coating-negative electrode primer layer 1211 formed on the other surface of the negative electrode current collector face each other (S4).

In this case, lamination is also performed by a lamination roll 1300 and the positive e lectrode primer layer 1111 and the negative electrode primer layer 1211 facing each other thro ugh the lamination are adhered to each other to form a firm bonding, thereby preventing peeling between the electrode current collectors. Respective positive electrode sheets and negative electrode sheets undergo a high-pressure rolling process to achieve high density, after which they are bonded together, and since this lamination does not need to be performed under high pressure, electrode damage can be minimized.

At this time, the lamination load can be appropriately selected, and for example, it can be performed such that the dry positive electrode film and the dry negative electrode sheet film have a density of 105% to 110% relative to the dry positive electrode material layer and the negative electrode material layer, respectively. Specifically, the lamination may be performed at a load of 0.5 to 2 tons/cm, or more specifically, 0.8 to 1.5 tons/cm.

Finally, once the attachment of the positive electrode sheet and the negative electrode sheet is completed, the method further comprise a cutting step of cutting the laminated sheet into unit electrodes (S5).

The cutting step may be performed by a cutter 1400, and each unit electrode may be cut so as to include an uncoated portion at its four-directional edges.

As yet another embodiment, referring to Figures 8 and 9, in order to manufacture an electrode for a bipolar battery, a sheet-type positive electrode current collector 2110 in which a primer layer 2111 is pattern-coated on both surfaces and a sheet-type negative electrode current collector 2210 in which a primer layer 2211 is pattern-coated on only the other surface are prepared (S10).

Here, the method for pattern-coating the primer layer is the same as that described with reference to Figures 7 and 10.

Next, a dry positive electrode material layer is formed on one surface of the primer-coated positive electrode current collector, and a wet negative electrode material layer is pattern-coated on one surface of the primer-coated negative electrode current collector where the primer layer is not pattern-coated (S20).

Specifically, the dry positive electrode material layer is formed by rolling and adhering the dry positive electrode film 2120 and the primer coated- positive electrode current collector by a rolling roll 2130, while the negative electrode material layer is formed by a wet method. Specifically, a negative electrode slurry 2220 is pattern-coated onto a primer-coated negative electrode current collector by a coating method known in the art, such as a coater 2221, and the resultant is then dried through a dryer 2240 and then rolled using rolling rolls 2230.

That is, if the negative electrode material layer is formed without forming the negative electrode primer layer 2211, a wet method can be used, and at this time, pattern-coating can be performed.

After the dry positive electrode layer and the wet negative electrode layer are formed in this manner, the dry positive electrode layer formed on the positive electrode uncoated portion where no positive electrode primer layer 2111 is formed is removed by a device such as an air injector 2140 (S30). The positive electrode sheet and the negative electrode sheet are laminated by a laminating roll 2300 so that the positive electrode primer layer 2111 formed on the other surface of the primer coated-positive electrode current collector and the negative electrode primer layer 2211 formed on the other surface of the primer coated-negative electrode current collector face each other (S40).

Finally, when the attachment of the positive electrode sheet and the negative electrode sheet is completed in this manner, the method may further comprise a cutting step of the laminated sheet into unit electrodes by a cutter 2400 (S50).

## Bipolar Assembly and Bipolar Battery

According to yet another embodiment of the present disclosure, a bipolar assembly comprising the electrode for bipolar battery and a separator is provided.

Here, the separator may be any of the components known in the art as a separator for lithium secondary batteries, and may be applied to the present disclosure.

Furthermore, according to yet another embodiment of the present disclosure, a bipolar battery comprising the bipolar assembly is provided.

Specifically, the bipolar battery may have a structure in which the bipolar assembly is incorporated in a battery case, and a positive electrode terminal and a negative electrode terminal are attached to the outermost electrodes on both sides of the bipolar assembly in the stacking direction.

Except for the respective electrode structures, various bipolar battery structures known in the art can be applied to the present disclosure.

Hereinafter, the present disclosure will be described with reference to examples to demonstrate the improved effects as intended by the present disclosure.

**<Example 1>**

## Preparation of Positive Electrode Sheet

96 g of LiFePO$_4$ as the positive electrode active material, 0.5 g of carbon black as the conductive material, and 3.5 g of polytetrafluoroethylene (PTFE) as the binder were placed in a blender and mixed at 10,000 rpm for 1 minute to prepare a mixture. The temperature of a kneader was stabilized at 150°C, and the mixture was placed in the kneader and then operated at 50 rpm for 5 minutes under a pressure of 1.1 atm to yield a mixture mass.

The resulting mixture mass was placed in a blender, pulverized at 10,000 rpm for 40 seconds, and sieved through a sieve with 1 mm pore size to yield an electrode powder. The resulting electrode powder was then placed several times in a lab calender (roll diameter: 88 mm, roll temperature: 100°C) to produce a positive electrode free-standing film with an electrode layer loading of 600 mg/25 cm$^2$ and a thickness of 100$\mu$m.

The positive electrode free-standing film was placed on one surface of aluminum foil (15$\mu$m) in which a

conductive primer layer (carbon black: PVDF = 30:70 on a weight basis) was discontinuously provided on both surfaces, and then rolled through a roll press maintained at 100°C. The electrode layer at positions where no primer layer was provided was detached by using an air gun to prepare a positive electrode sheet.

**Preparation of Negative Electrode Sheet**

96 g of graphite as the negative electrode active material, 1.0 g of Super C-65 as the conductive material, and 3.5 g of polytetrafluoroethylene (PTFE) were placed in a blender and mixed at 10,000 rpm for 1 minute to prepare a mixture. The temperature of a kneader was stabilized at 150°C, and the mixture was placed in the kneader and then operated at 50 rpm for 5 minutes under a pressure of 1.1 atm to yield a mixture mass.

The resulting mixture mass was placed in a blender, pulverized at 10,000 rpm for 40 seconds, and sieved through a sieve with 1 mm pore size to yield an electrode powder. The resulting electrode powder was then placed several times in a lab calender (roll diameter: 88 mm, roll temperature: 100°C) to fabricate a negative electrode free-standing film with an electrode layer loading of 300 mg/25 cm$^2$ and a thickness of 100 $\mu$m.

The negative electrode free-standing film was placed on one surface of aluminum foil (8 $\mu$m) in which a conductive primer layer (graphite: PVDF = 30:70 on a weight basis) was discontinuously provided on both surfaces, and then rolled through a roll press maintained at 100°C. The electrode layer at positions where no primer layer was provided was detached by using an air gun to prepare a negative electrode sheet.

**Manufacture of Electrode**

Under the state that the positive electrode sheet and negative electrode sheet prepared above were aligned between the active material layers, a portion where no electrode layer was formed in the positive electrode sheet and a portion where no electrode layer was formed in the negative electrode sheet were set to face each other (two primer layers - composition difference), and laminated through a roll press to manufacture an electrode.

At this time, lamination was carried out so as to have a density of 105% relative to the density of the free-standing film.

**<Example 2>**

An electrode was manufactured in the same manner as in Example 1, except that lamination was carried out so as to have a density of 110% relative to the density of the frees-standing film.

**<Example 3>**

A positive electrode sheet was prepared in the same manner as in Example 1, and a negative electrode sheet was prepared as follows.

96 g of graphite as the negative electrode active material, 1.0 g of Super C-65 as the conductive material, and 3.0 g of SBR binder and thickener were mixed to prepare a slurry, and the slurry was then coated on one surface of copper foil (8 $\mu$m) in which a conductive primer layer (carbon black: PVDF = 30:70 on a weight basis) was discontinuously provided on both surfaces, and then dried and rolled to form an electrode layer with an electrode layer loading of 300 mg/25 cm$^2$ and a thickness of 100 $\mu$m. The electrode layer at positions where no primer layer was provided was detached by using an air gun to prepare a negative electrode sheet.

Subsequently, the positive electrode sheet and the negative electrode sheet were laminated through a roll press so as to have a density of 105% relative to the lamination electrode layer density, in the same manner as in Example 1, thereby manufacturing an electrode.

**<Example 4>**

An electrode (two primer layers-same composition) was manufactured in the same manner as in Example 1, except that in Example 1, the negative electrode free-standing film was positioned on one surface of a copper foil (8 $\mu$m) discontinuously coated on both surfaces with a conductive primer layer (carbon black: PVDF = 30:70 on a weight basis), and then rolled through a roll press maintained at 100°C, and the electrode layer at positions where no primer layer was provided was detached by using an air gun to prepare a negative electrode sheet.

**<Example 5>**

An electrode (two primer layers-same composition) was manufactured in the same manner as in Example 3, except that in Example 3, 96 g of graphite as the negative electrode active material, 1.0 g of Super C-65 as the conductive material and 3.0 g of SBR binder and thickener were mixed to prepare a slurry, the slurry was pattern-coated onto one surface of a copper foil (8 $\mu$mm) in which a conductive primer layer (carbon black: PVDF = 30:70 on a weight basis) was discontinuously provided on both surfaces, and then dried and rolled to form an electrode layer with an electrode layer loading of 300 mg/25cm$^2$ and a thickness of 100 $\mu$m, thereby manufacturing an electrode.

### <Comparative Example 1>

96 g of LiFePO$_4$ as the positive electrode active material, 0.5 g of CNT as the conductive material, and 3.5 g of PVDF as the binder were mixed to prepare a positive electrode slurry, and 96 g of graphite as the negative electrode active material, 1.0 g of Super C-65 as the conductive material, and 3.0 g of SBR binder and thickener were mixed to prepare a negative electrode slurry. The slurries were sequentially coated on a Cu-coated Al foil, where the positive electrode slurry was applied to the Al surface and the negative electrode slurry to the Cu surface, followed by passing a drying zone to complete an unrolled electrode. The coating loading was the same as in Example 1.

The unrolled electrode was then rolled through a roll press maintained at 100°C to manufacture an electrode for a bipolar battery. At this time, rolling was carried out so as to have the same electrode density as in Example 1.

### <Comparative Example 2>

An electrode for bipolar battery was manufactured in the same manner as in Comparative Example 1, except that the rolling was carried out so as to have the same electrode density as in Example 2.

### <Comparative Example 3>

The positive electrode free-standing film fabricated as in Example 1 was located on one surface of an aluminum foil (15 $\mu$m) in which a conductive primer layer (carbon black: PVDF = 30:70 on a weight basis) was discontinuously provided on both surfaces, and then rolled through a roll press maintained at 100°C, and then the electrode layer at positions where no primer layer was provided was detached by using an air gun to prepare a positive electrode sheet.

In addition, the negative electrode free-standing film fabricated as in Example 1 was located on one surface of a copper foil (8 $\mu$m) in which a conductive primer layer (graphite: PVDF = 30:70 on a weight basis) was discontinuously provided on one surface, and then rolled through a roll press maintained at 100°C, and then the electrode layer at positions where no primer layer was provided was detached by using an air gun to prepare a negative electrode sheet.

### Manufacture of Electrode

Under the state that the positive electrode sheet and negative electrode sheet prepared above were aligned between active material layers, a portion on which no electrode layer was formed in the positive electrode sheet and a portion on which no electrode layer was formed in the negative electrode sheet were set to face each other (one primer layer), and laminated through a roll press to manufacture an electrode.

At this time, lamination was carried out so as to have a density of 105% relative to the density of the free-standing film.

### <Comparative Example 4>

A current collector in which a conductive primer layer (carbon black : PVDF = 30:70 on a weight basis) was formed on both surface of a Cu-coated Al foil was prepared.

The positive electrode free-standing film and negative electrode free-standing film fabricated as in Example 1 were respectively laminated on both surfaces of a Cu-coated Al foil in which a conductive primer layer was formed in the same manner as in Example 1, thereby manufacturing an electrode.

### <Experimental Example 1>

Based on the positive electrode layer and the negative electrode layer in the electrodes manufactured in Examples 1 to 5 and Comparative Examples 1 to 4, the electrode loading amount, electrode layer thickness, electrode layer density, electrode adhesion strength, adhesion strength between foils, and appearance characteristics were measured and compared, and the results are shown in Tables 1 and 2 below.

The respective characteristics were evaluated by the following methods.

- Electrode loading amount: After punching 5 cm x 5 cm electrodes, the weight of the electrodes excluding the weight of the foil was measured.

- Electrode layer thickness: The electrode layer thickness, excluding the foil thickness, was measured using SEM cross-section analysis or a thickness gauge.

- Electrode layer density: The density of the electrode excluding the foil was measured, and calculated using the electrode loading amount and electrode layer thickness.

- Electrode adhesion strength: After cutting the electrode to a size of 2 cm x 10 cm, double-sided tape was attached to a slide glass, and the surface of the electrode to be measured was adhered to the slide glass with the double-sided tape. The slide glass was then positioned in the UTM device, and then the electrode layer was peeled off at a 90-degree angle at a speed of 2 m/min to measure the adhesion strength.

- Adhesion strength between foils: After cutting the electrode to a size of 2 cm x 10 cm, the ends of the both side foils were fixed with UTM clips. The foils were peeled off at a speed of 2 m/min at an 1800-degree angle to measure the adhesion.

- Appearance characteristics: The electrodes were visually inspected for cracks and splits at the ends. Electrodes without scratches were rated as OK, and electrodes with scratches were rated as NG.

[Table 1]

| Based on positive electrode side | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|
| Electrode loading amount (mAh/cm$^2$ ) | 590 | 580 | 590 | 590 | 590 | 590 | 580 | 590 | 590 |
| Electrode layer thickness ($\mu$m) | 94.4 | 89.4 | 94.4 | 94.4 | 94.4 | 94.4 | 89.4 | 94.4 | 94.4 |
| Electrode layer density (g/cm$^3$) | 2.52 | 2.64 | 2.52 | 2.52 | 2.52 | 2.52 | 2.64 | 2.52 | 2.52 |
| Electrode adhesion strength (gf/cm$^2$) | 80 | 90 | 80 | 50 | 50 | 80 | 90 | 80 | 80 |
| Adhesion strength between foils (gf/cm$^2$) | 100 or more | 100 or more | 100 or more | 80 or more | 80 or more | X(not peeled off) | X(nonpeelable) | 10-20 | X(nonpeelable) |
| Appearance characteristics | OK | OK | OK | OK | OK | NG | NG | NG | NG |

[Table 2]

| Based on negative electrode side | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|
| Electrode loading amount (mAh/cm$^2$) | 272 | 267 | 272 | 272 | 272 | 272 | 267 | 272 | 272 |

(continued)

| Based on negative electrode side | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|
| Electrode layer thickness ($\mu$m) | 66.4 | 65.3 | 66.4 | 66.4 | 66.4 | 66.4 | 65.3 | 66.4 | 66.4 |
| Electrode layer | 1.49 | 1.50 | 1.49 | 1.49 | 1.49 | 1.49 | 1.50 | 1.49 | 1.49 |
| density (g/cm$^3$) | | | | | | | | | |
| Electrode adhesion strength (gf/cm$^2$) | 50 | 60 | 50 | 40 | 40 | 50 | 60 | 50 | 50 |
| Adhesion strength between foils (gf/cm$^2$) | 100 or more | 100 or more | 100 or more | 80 or more | 80 or more | X(nonpeelable) | X(nonpeelable) | 10-20 | X(nonpeelable) |
| Appearance characteristics | OK | OK | OK | OK | OK | NG | NG | NG | NG |

Referring to Tables 1 and 2, according to the present disclosure, it is possible to manufacture an electrode that has excellent appearance characteristics while securing sufficient electrode adhesion strength.

In contrast, Comparative Examples are problematic in that, even if the adhesive strength is excellent, the appearance characteristics may be deteriorated, and when a single primer layer is formed, the adhesive strength between foils is significantly reduced.

Meanwhile, referring to Examples 1, 4, and 5, it can be confirmed that, when the primer layer compositions of the positive electrode and negative electrode are different from each other, and when dry electrodes are used for both the positive electrode and negative electrode, they exhibit superior adhesion strength between electrodes and foils.

**<Experimental Example 2>**

An electrode assembly having a form in which the electrodes manufactured in Examples 1 to 5 and Comparative Examples 1 to 4 and separators (polyethylene-based polymer membranes) were alternately laminated was prepared, but a bipolar cell was produced by isolating into individual bipolar unit cells using a sealing member.

The bipolar cells were initially (one-time) charged and discharged using an electrochemical charger/discharger. At this time, charging was performed with a current density of 0.33 C-rate up to a voltage of 3.6V at 25°C, and discharging was performed with the same current density up to a voltage of 2.5 V. This charge/discharge cycle was repeated a total of 100 times.

During the charge/discharge process, the capacity of each bipolar cell was measured, and the capacity retention was calculated as follows. The results are shown in Table 3 below.

$$\text{Capacity retention (\%)} = (\text{Capacity at 100 cycles / Initial capacity}) \times 100$$

[Table 3]

| | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|
| Capacity retention (%) | 95 | 94 | 94 | 93 | 93 | 70 | 68 | Sudden death | 70 |

Referring to Table 3, it can be seen that electrodes manufactured according to the present disclosure is excellent in adhesion strength and has no electrode defects, thereby exhibiting high capacity retention.

In contrast, it can be confirmed that the electrodes of Comparative Examples exhibit significantly reduced capacity retention due to the generation of electrode curls, wrinkles, and pinholes, as well as reduction in the adhesion strength.

Based on the above disclosure, various applications and modifications can be carried out by those of ordinary skill in the art without deviating from the spirit and scope of the present disclosure.

**[Industrial Applicability]**

The electrode for bipolar battery and its manufacturing method according to the present disclosure utilize separate positive and negative current collectors, but a primer layer is applied between them, thereby being able to enhance the adhesive strength and thus minimizing the occurrence of problems such as peeling. Also, after these electrodes are manufactured, they are adhered by lamination, and thus overcomes the physical property differences, such as differences in active material and ductility, that arise when applying a positive electrode layer and a negative electrode layer to a single current collector. Further, high-density electrodes can be achieved without migration issues or electrode damage, thereby improving durability and energy density.

Moreover, according to the present disclosure, when forming an electrode material layer by a dry process, a pattern-coated electrode sheet can be manufactured by forming a positive electrode material layer and a negative electrode material layer on a sheet-type current collector on which a primer layer is pattern-coated, and removing the electrode material layer in a portion where the primer layer is not coated, thereby making the process simple, highly efficient, and facilitating process development.

**Claims**

1. An electrode for a bipolar battery comprising:

   a positive electrode that comprises a positive electrode current collector, a first positive electrode primer layer formed on one surface of the positive electrode current collector, a second positive electrode primer layer formed on the other surface of the positive electrode current collector, and a dry positive electrode material layer formed on the first positive electrode primer layer, and
   a negative electrode that comprises a negative electrode current collector, a negative electrode material layer formed on one surface of the negative electrode current collector, and a second negative electrode primer layer formed on the other surface of the negative electrode current collector,
   wherein the second positive electrode primer layer of the positive electrode and the second negative electrode primer layer of the negative electrode are adhered in a direction facing each other.

2. The electrode for a bipolar battery according to claim 1,
   wherein the negative electrode material layer is a wet negative electrode material layer.

3. The electrode for a bipolar battery according to claim 1,
   wherein a first negative electrode primer layer is formed between the negative electrode current collector and the negative electrode material layer on one surface of the negative electrode current collector, and the negative electrode material layer is a wet negative electrode material layer or a dry negative electrode material layer.

4. The electrode for a bipolar battery according to claim 1 or 3,

wherein the first positive electrode primer layer, the second positive electrode primer layer, the first negative electrode primer layer, and the second negative electrode primer layer each comprise a conductive material and a binding material.

5. The electrode for a bipolar battery according to claim 4,
wherein the positive electrode primer layer of the first positive electrode primer layer and the second positive electrode primer layer, and the negative electrode primer layer of the first negative electrode primer layer and the second negative electrode primer layer have mutually different compositions.

6. The electrode for a bipolar battery according to claim 1,
wherein the first positive electrode primer layer and the second positive electrode primer layer are respectively coated so that positive electrode uncoated portions are formed on the four directional edges on one surface and the other surface of the positive electrode current collector.

7. The electrode for a bipolar battery according to claim 1 or 3,
wherein the first negative electrode primer layer and the second negative electrode primer layer are respectively coated so that negative electrode uncoated portions are formed on the four directional edges on one surface and the other surface of the negative electrode current collector.

8. The electrode for a bipolar battery according to claim 1 or 3,
wherein the first positive electrode primer layer and the second positive electrode primer layer are respectively formed over an area of 60% to 80% of the entire width of the upper surface of the positive electrode current collector, and the first negative electrode primer layer and the second negative electrode primer layer are respectively formed over an area of 60% to 80% of the entire width of the upper surface of the negative electrode current collector.

9. The electrode for a bipolar battery according to claim 1,
wherein the dry positive electrode material layer is formed over an area of 60% to 80% of the entire width of the upper surface of the positive electrode current collector, and the first negative electrode material layer is formed over an area of 60% to 80% of the entire width of the upper surface of the negative electrode current collector.

10. The electrode for a bipolar battery according to claim 1,
wherein the dry positive electrode material layer is a dry film containing no solvent, and comprises a positive electrode active material, a conductive material, and a binder, wherein the binder comprises a fiberized polymer.

11. The electrode for a bipolar battery according to claim 2 or 3,
wherein the wet negative electrode material layer is a coating layer in a state where the solvent is volatilized from a slurry prepared so as to contain a solvent, and comprises a negative electrode active material, a conductive material, and a binder.

12. The electrode for a bipolar battery according to claim 3,
wherein the dry negative electrode material layer is a dry film containing no solvent, and comprises a negative electrode active material, a conductive material, and a binder, wherein the binder comprises a fiberized polymer.

13. A method for manufacturing an electrode for a bipolar battery, the method comprising:

a step of pattern-coating one surface and the other surface of a sheet-type positive electrode current collector so that a positive electrode coated portion coated with a positive electrode primer layer and a positive electrode uncoated portion not coated with the positive electrode primer layer are alternately arranged to thereby prepare a primer-coated positive electrode current collector, rolling a sheet-type dry positive electrode film onto the positive electrode primer layer on one surface of the primer-coated positive electrode current collector to form a dry positive electrode material layer, and then removing the dry positive electrode material layer formed on the positive electrode uncoated portion where no positive electrode primer layer is formed, to thereby prepare a positive electrode sheet,
a step of pattern-coating the other surface of a sheet-type negative electrode current collector so that a negative electrode coated portion coated with a negative electrode primer layer and a negative electrode uncoated portion not coated with the negative electrode primer layer are arranged alternately to thereby prepare a primer-coated negative electrode current collector, and forming a pattern-coated negative electrode material layer on one surface of the negative electrode current collector so as to correspond to the formation position of the negative electrode primer layer to thereby prepare a negative electrode sheet, and

a step of laminating the positive electrode sheet and the negative electrode sheet so that the positive electrode primer layer formed on the other surface of the primer coated positive electrode current collector faces the negative electrode primer layer formed on the other surface of the primer coated negative electrode current collector to thereby prepare an electrode sheet.

14. The method for manufacturing an electrode for a bipolar battery according to claim 13,
wherein the pattern-coated negative electrode material layer is a wet negative electrode material layer in which a negative electrode slurry is pattern-coated on one surface of a negative electrode current collector and dried.

15. The method for manufacturing an electrode for a bipolar battery according to claim 13,
wherein the primer-coated negative electrode current collector is prepared by pattern-coating one surface and the other surface of a sheet-type negative electrode current collector so that a negative electrode coated portion coated with a negative electrode primer layer and a negative electrode uncoated portion not coated with the negative electrode primer layer are alternately arranged, and the pattern-coated negative electrode material layer is formed either by applying negative electrode slurry onto the negative electrode primer layer, which is coated on one surface of the negative electrode current collector, and drying it to form a wet negative electrode material layer, or by rolling a sheet-type dry negative electrode film to form a dry negative electrode material layer, and then removing the wet negative electrode material layer or dry negative electrode material layer formed on the negative electrode uncoated portion where the negative electrode primer layer is not formed.

16. The method for manufacturing an electrode for a bipolar battery according to claim 13,
wherein a primer-coated negative electrode current collector is prepared by pattern-coating one surface and the other surface of the sheet-type negative electrode current collector so that a negative electrode coated portion coated with a negative electrode primer layer and a negative electrode uncoated portion not coated with the negative electrode primer layer are alternately arranged, and the pattern-coated negative electrode material layer is prepared by pattern-coating a negative electrode slurry onto a negative electrode primer layer coated on one surface of a negative electrode current collector, and then drying the negative electrode slurry to form a wet negative electrode material layer.

17. The method for manufacturing an electrode for a bipolar battery according to any one of claims 13, 15 and 16,
wherein the positive electrode primer layer and the negative electrode primer layer are respectively coated so as to form a positive electrode uncoated portion and a negative electrode uncoated portion on both surfaces of the positive electrode current collector and the negative electrode current collector, based on the width direction.

18. The method for manufacturing an electrode for a bipolar battery according to any one of claims 13, 15 and 16,
wherein the positive electrode primer layer and the negative electrode primer layer are coated by a wet process.

19. The method for manufacturing an electrode for a bipolar battery according to any one of claim 13 or 15,
wherein the removal of the dry positive electrode material layer formed on the positive electrode uncoated portion where no positive electrode primer layer is formed, and the removal of the dry negative electrode material layer or the wet negative electrode material layer formed on the negative electrode uncoated portion where no negative electrode primer layer is formed are performed by air spraying.

20. The method for manufacturing an electrode for a bipolar battery according to claim 13,
further comprising a cutting step of cutting the laminated sheet into unit electrodes after laminating the positive electrode sheet and the negative electrode sheet.

21. A bipolar assembly comprising: the electrode for a bipolar battery as set forth in claim 1 and a separator.

22. A bipolar battery comprising the bipolar assembly as set forth in claim 21,
wherein the bipolar assembly is incorporated into a battery case, and a positive electrode terminal and a negative electrode terminal are attached to the outermost electrodes on both surfaces in the laminating direction of the bipolar assembly, respectively.

**Figure 1**

10

A1

Cu

12

11

13

**Figure 2**

100

114

112

111

113

110

123

121

122

124

120

**Figure 3**

214

212

211

213

210

223

221

224

220

**Figure 4**

**Figure 5**

**Figure 6**

| | |
|---|---|
| Preparing a sheet-type positive electrode current collector and a sheet-type negative electrode current collector, respectively, with a primer layer being pattern-coated on both surfaces | S1 |

⬇

| | |
|---|---|
| Forming one surface of the primer-coated positive electrode current collector and one surface of the primer-coated negative electrode current collector with a dry positive electrode material layer and negative electrode material layer | S2 |

⬇

| | |
|---|---|
| Forming dry positive electrode material layer and negative electrode material layer on the positive electrode uncoated portion where no positive electrode primer layer is formed, and the negative electrode uncoated portion where no negative electrode primer layer is formed | S3 |

⬇

| | |
|---|---|
| Laminating the positive electrode sheet and the negative electrode sheet so that the positive electrode primer layer formed on the other surface of the primer-coated positive electrode collector and the negative electrode primer layer formed on the other surface of the primer-coated negative electrode collector face each other | S4 |

⬇

| | |
|---|---|
| Cutting the laminated sheet into unit electrodes | S5 |

**Figure 7**

EP 4 769 513 A1

**Figure 8**

| |
|---|
| Preparing a sheet-type positive electrode current collector in which a primer layer is pattern-coated on both surfaces and a sheet-type negative electrode current collector in which a primer layer 2211 is pattern-coated on only the other surface |

S10

⬇

| |
|---|
| Forming a dry positive electrode material layer on one surface of the primer-coated positive electrode current collector, and pattern-coating a wet negative electrode material layer on one surface of the primer-coated negative electrode current collector where the primer layer is not pattern-coated |

S20

⬇

| |
|---|
| Removing the dry positive electrode layer formed on the positive electrode uncoated portion where no positive electrode primer layer is formed |

S30

⬇

| |
|---|
| Laminating the positive electrode sheet and the negative electrode sheet so that the positive electrode primer layer formed on the other surface of the primer coated-positive electrode current collector and the negative electrode primer layer formed on the other surface of the primer coated-negative electrode current collector face each other |

S40

⬇

| |
|---|
| Cutting the laminated sheet into unit electrodes |

S50

24

**Figure 9**

中

**Figure 10**

**TRANSLATION**

<div align="center">

**INTERNATIONAL SEARCH REPORT**

</div>

| International application No. |
|---|
| **PCT/KR2025/014321** |

| A. | CLASSIFICATION OF SUBJECT MATTER |
|---|---|

**H01M 4/13**(2010.01)i; **H01M 4/66**(2006.01)i; **H01M 4/139**(2010.01)i; **H01M 4/04**(2006.01)i; **H01M 10/052**(2010.01)i; **H01M 50/543**(2021.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/13(2010.01); H01M 10/04(2006.01); H01M 10/052(2010.01); H01M 4/04(2006.01); H01M 4/133(2010.01); H01M 4/58(2010.01); H01M 4/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 바이폴라 전지(bipolar battery), 양극(cathode), 음극(anode), 집전체(current collector), 프라이머층(primer layer), 접착(adhesion)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2024-0102736 A (LG ENERGY SOLUTION, LTD.) 03 July 2024 (2024-07-03)<br>claims 1, 11, 17; paragraphs [0080], [0158], [0159]; figures 1, 2 | 1-22 |
| A | KR 10-2022-0028424 A (LG ENERGY SOLUTION, LTD.) 08 March 2022 (2022-03-08)<br>abstract; claims 1-16 | 1-22 |
| A | KR 10-2024-0118959 A (LG ENERGY SOLUTION, LTD.) 06 August 2024 (2024-08-06)<br>abstract; claims 1-13 | 1-22 |
| A | CN 117038997 A (BEIJING CHJ AUTOMOTIVE TECHNOLOGY CO., LTD.) 10 November 2023 (2023-11-10)<br>abstract; claims 1-16 | 1-22 |
| A | CN 115188970 A (RUIPU LANJUN ENERGY CO., LTD.) 14 October 2022 (2022-10-14)<br>abstract; claims 1-10 | 1-22 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 December 2025** | **17 December 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

TRANSLATION

**INTERNATIONAL SEARCH REPORT**
**Information on patent family members**

International application No.

**PCT/KR2025/014321**

| Patent document cited in search report | | | Publication date (day/month/year) | Patent family member(s) | | | Publication date (day/month/year) |
|---|---|---|---|---|---|---|---|
| KR | 10-2024-0102736 | A | 03 July 2024 | None | | | |
| KR | 10-2022-0028424 | A | 08 March 2022 | CN | 114514643 | A | 17 May 2022 |
| | | | | CN | 114514643 | B | 11 October 2024 |
| | | | | CN | 118919736 | A | 08 November 2024 |
| | | | | EP | 4024537 | A1 | 06 July 2022 |
| | | | | EP | 4024537 | A4 | 01 March 2023 |
| | | | | EP | 4024537 | B1 | 06 August 2025 |
| | | | | EP | 4611058 | A2 | 03 September 2025 |
| | | | | US | 2022-0344672 | A1 | 27 October 2022 |
| | | | | WO | 2022-045554 | A1 | 03 March 2022 |
| KR | 10-2024-0118959 | A | 06 August 2024 | None | | | |
| CN | 117038997 | A | 10 November 2023 | None | | | |
| CN | 115188970 | A | 14 October 2022 | None | | | |

Form PCT/ISA/210 (patent family annex) (July 2022)

**EP 4 769 513 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240133961

- KR 1020250130613